# EUROPEAN PATENT SPECIFICATION

(11) **EP 2 189 689 B1**
(45) Date of publication and mention of the grant of the patent: **12.11.2014**
(21) Application number: 07806644.6
(22) Date of filing: 04.09.2007
(51) Int. Cl.: F16J 15/32

(54) **HERMETIC SEALING DEVICE**
HERMETISCHE DICHTUNGSVORRICHTUNG
DISPOSITIF D'ÉTANCHÉITÉ HERMÉTIQUE

(43) Date of publication of application: 26.05.2010
(73) Proprietor: Arai Seisakusho Co., Ltd, Tokyo 124-8566 (JP)
(72) Inventor: SYAMOTO, Yoshihiro, Tokyo 124-8566 (JP)
(74) Representative: Crosby, Wendy Agnes
(86) International application number: PCT/JP2007/067176
(87) International publication number: WO 2009/031199

(56) References cited:
- EP-A1- 1 479 949
- JP-U- 05 030 638
- JP-U- 61 129 966
- US-A- 6 036 193
- US-B1- 6 726 211

## Description

### TECHNICAL FIELD

The present invention relates to a hermetic sealing device, such as an oil seal with a screw, that seals a ring-shaped space between two components assembled such as to rotate freely in relation to each other.

### BACKGROUND ART

As a type of hermetic sealing device such as this, a hermetic sealing device is conventionally known in which a thread projection is formed on an atmosphere side sliding surface of a sealing lip, the sealing lip being in sealing contact with an outer circumferential surface of a rotating shaft of a ring-shaped seal main body such as to rotate freely. Sealing performance is enhanced by a pumping effect achieved by the thread projection. However, although parallel thread projections having constant height and width can ensure initial sealability, a problem occurs in that the effect of the thread deteriorates when the sealing lip becomes worn over time.

A hermetic sealing device is proposed in which a thread provided on an atmosphere side sliding surface of a sealing lip is shaped such that a uniformly shaped sub thread having an almost constant height is continuously formed on the lip tip side of a main thread. A main thread becomes larger from the sub thread towards the atmosphere side, and contact width increases over time in use. In the above-described hermetic sealing device, the uniformly shaped sub thread having an almost constant height is continuously formed on the lip tip side of the main thread provided on the atmosphere side sliding surface of the lip. The height of the thread peak of the main thread gradually increases from the sub thread towards the atmosphere side, ensuring contact length of the thread when wear occurs over time in use. The hermetic sealing device is effective in terms of preventing deterioration of sealability caused by wear of the sealing lip, and maintaining the effect of the thread at an initial stage and over a long period (refer to Patent Literature 1).

As a hermetic sealing device similar to that described in Patent Literature 1, an oil seal with a screw shown in Fig. 6 and Fig. 7 is proposed. In the oil seal with a screw, two types of threads 102 and 103 are alternately provided on a sealing surface 101 at a predetermined angle of tilt K. The threads 102 and 103 achieve a pumping effect in which lubricating oil or the like that attempts to leak from the sealed side OS to the atmosphere side is constantly retained on the sealed side. The height of one thread 102 is constant. The other thread 103 is a stepped thread, in which a height h1 in an area near a lip tip 104 is a low height equivalent to that of the thread 102, forming a low projecting section 103a. A height h2 in an area distant from the lip tip 104 is higher than the low projecting section 103a, forming a high projecting section 103c. The low projecting section 103a and the high projecting section 103c are connected by an angled section 103b (refer to Patent Literature 2).
Patent Literature 1: Japanese Patent No. JP-B-3278349 (& JP-A-9042 463), showing in Figure 7 all features of the preamble of claim 1.
Patent Literature 2: Japanese Patent Laid-open Publication No. 2001-173798

When the stepped thread provided with a main thread and a sub thread, described in Patent Literature 1 and Patent Literature 2, is used, in an initial stage of use when the lip tip 104 that is in an unworn state or a slightly worn state comes into contact with a rotating shaft 106, a strong pumping effect can be achieved by the thread 102 having a constant height and the low projecting section 103a of the stepped thread 103. When wear of the lip tip progresses, the angled section 103b and the high projecting section 103c that are higher than the low projecting section 103a of the stepped thread 103 gradually come into contact with the rotating shaft 106. Therefore, the height from the sealing surface 101 of the screw 103 contacting the rotating shaft 106 gradually increases, strengthening the pumping effect by which the sealed fluid that attempts to leak is constantly positioned on the sealed side OS. Stable sealability can be maintained.

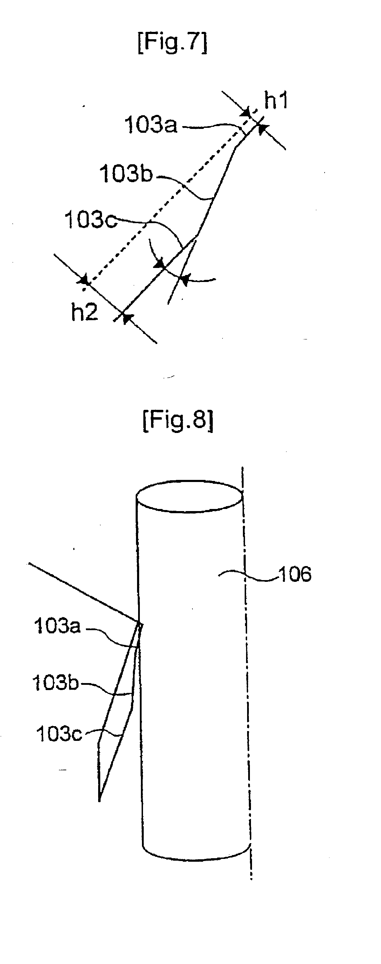

However, in the thread projections described in Patent Literature 1 and Patent Literature 2, with the atmosphere side sliding surface 101 serving as a base surface, the height of the thread peak in relation to the base surface 101 (atmosphere side sliding surface) is stepped, forming the low projecting section 103a, the angled section 103b, and the high projecting section 103c. Therefore, when the seal main body is mounted on the shaft 106, as shown in Fig. 8, a space between the shaft 106 and the angled section 103b of the stepped thread becomes narrow in the mounted state. The space becomes even narrower at the low projecting section 103a.

As a result, when dust infiltrates the atmosphere side sliding surface 101 from outside, high-speed rotation of the rotating shaft 106 causes the dust to scatter while being rotated around the rotating shaft 106. The dust is guided between the angled section 103b and the rotating shaft 106 while colliding with the surface of the high projecting section 103c of the stepped thread. Furthermore, the dust collides with the angled section 103b and is guided along the angled section, entering the narrow space between the low projecting section 103a and the rotating shaft 106. The dust becomes caught in the lip tip section, and a problem occurs in that there is risk of oil leakage.

US 6, 036,193 describes an oil seal and a method of making the seal in which a lip-type seals having helical pumping ribs are manufactured by preparing a moulded foreporduct of the seal by trimming a hat portion to form a shap sealing edge. Each of the ribs is configured to include a first section of uniform cross-section and a bilge shaped second section.

A solution to the above-descried problem is to increase the sealing angle midway, rather than increasing the height of the thread peak. When this solution is used, the thread peak becomes gradually higher as a result, and an effect similar to that of the above-described conventional Patent Literature 2 can be expected. However, in this instance, a bending point is formed at a point of change at which the sealing angle is increased midway. When wear progresses to the bending point, a problem occurs in that sealability becomes unstable.

### DISCLOSURE OF INVENTION

### PROBLEM TO BE SOLVED BY THE INVENTION

The present invention has been achieved in light of the above-described problems. An object of the present invention is to form a change in a sealing angle of a lip tip section by use of a large curve, rather than configuring the sealing angle by two surfaces, and to use a straight line to form a ridge line of a thread peak, thereby eliminating instability caused by angle change.

### MEANS FOR SOLVING PROBLEM

To achieve the above-described object, a hermetic sealing device of the present invention is a hermetic sealing device that seals a ring-shaped space between two components assembled such as to rotate freely in relation to each other, the sealing device comprising a ring-shaped seal main body assembled to one component of the two components and a thread on an atmosphere side sliding surface of a sealing lip included in the seal main body that is in sliding contact with the other component of the two components wherein the thread is formed on the atmosphere side sliding surface, connecting a low projecting section at the lip tip to a high projecting section having a required height provided at a predetermined position distant from the lip tip, and the height of the thread gradually and continuously increases away from the lip tip and wherein the thread gradually widens from the lip tip, characterized in that in the unassembled condition, the atmosphere side sliding surface of the sealing lip is formed into a large curve starting from the sealing lip tip and receding from a surface of the component with which the lip is in sliding contact towards the atmosphere side, and a ridge line of the thread peak of the formed thread is linear along the entirety of the ridge line.

### EFFECT OF THE INVENTION

In the hermetic sealing device of the present invention, an atmosphere side sliding surface of a sealing lip is formed by a large curve that passes a tip of the sealing lip and recedes from a surface of a component with which the lip is in sliding contact towards the atmosphere side. With a height of a projecting section of a thread at a predetermined position distant from the lip tip being a desired height, the thread formed on the atmosphere side sliding surface is formed connecting the lip tip to the high projecting section having desired height. A ridge line of a thread peak of the thread is linear. A thread is formed such that the height of the thread peak gradually increases away from the lip tip. Because the atmosphere side sliding surface is formed by a large curve passing the tip of the sealing lip as described above, instability caused by an angle change in the sealing angle can be eliminated.

In addition, when an oil seal main body is assembled to a shaft, because the ridge line of the thread peak is linear as described above, a portion at which the thread approaches the shaft is not formed on the shaft as well. Therefore, a space between the shaft and the sealing lip can be maintained. As a result, risk of infiltrating dust being guided to a contacting section of the sealing lip tip can be suppressed. An effect can be achieved in that leakage of a sealed fluid accompanying damage to the lip caused by dust being caught in the sealing lip can be prevented.

### BRIEF DESCRIPTION OF DRAWINGS

Fig. 1 is a half cross-sectional view of a hermetic sealing device according to an embodiment of the present invention.
Fig. 2 is an enlarged explanatory diagram of an atmosphere side sliding surface and a thread.
Fig. 3 is an enlarged cross-sectional view taken along line A-A in Fig. 2.
Fig. 4 is an explanatory diagram of a state of the thread during mounting to a shaft.
Fig. 5 is an explanatory diagram of a relationship between lip wear width, back leakage wear width, and back leakage amount of a product according to the embodiment of the present invention and a conventional product.

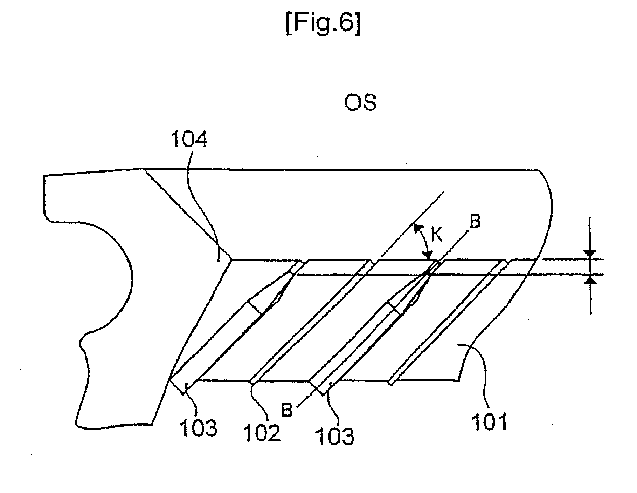

Fig. 6 is an enlarged explanatory diagram of a thread of a conventional example.
Fig. 7 is an enlarged cross-sectional view taken along line B-B in Fig. 6.
Fig. 8 is an explanatory diagram of the conventional example during mounting on a shaft.

### EXPLANATIONS OF LETTERS OR NUMERALS

### BEST MODE(S) FOR CARRYING OUT THE INVENTION

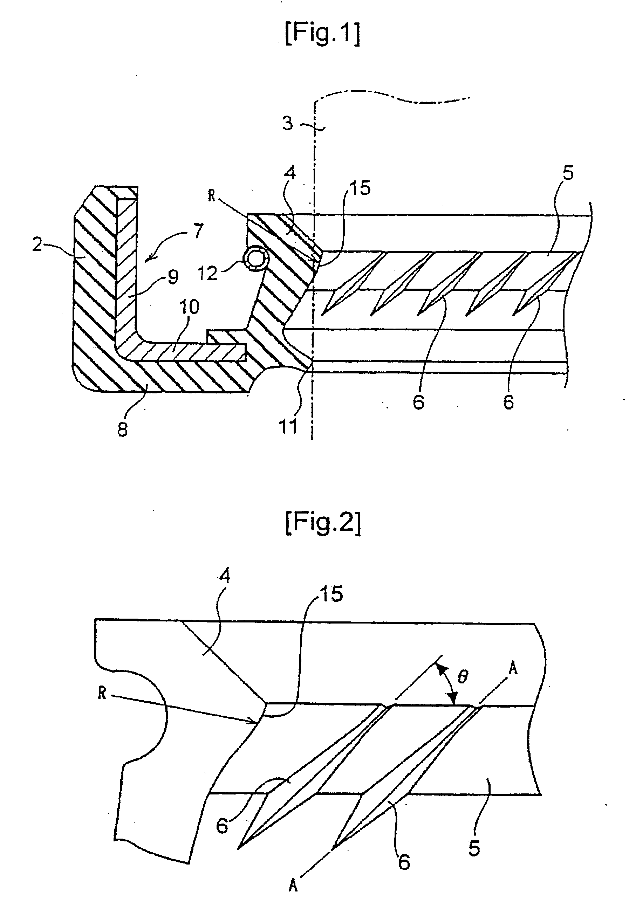

An embodiment of the present invention will be described. In Fig. 1, an oil seal 1 has a seal main body 2 that is mounted on one component, such as a housing, of two components that rotate in relation to each other, and a sealing lip 4 that slides over and is in sealing contact with a shaft 3 that is the other component. A thread 6 is formed on an atmosphere side sliding surface 5 of the sealing lip 4 at a predetermined angle θ.

The seal main body 2 is made of a metal reinforcing ring 7 having an L-shaped cross-section and a rubber elastic body 8. The rubber elastic body 8 is burned onto the outer peripheral portion of a cylindrical section 9 of the metal reinforcing ring 7 and the outer periphery of a flange section 10 of the metal reinforcing ring 7. The sealing lip 4 is provided on the sealed fluid side of an inner end of the flange section 10 of the metal reinforcing ring 7, and a dust lip 11 is provided on the atmosphere side. The sealing lip 4 is in sliding contact with the shaft 3 and achieves a sealing effect. The dust lip 11 is in contact with the shaft 3 and prevents infiltration of dust on the atmosphere side. A spring 12 is mounted on the outer periphery of the sealing lip 4 to add straining force onto the shaft 3.

The atmosphere side sliding surface 5 of the sealing lip 4 according to the embodiment is formed by a curve 15 having a large diameter R. The curve 15 passes the tip of the sealing lip 4 and recedes from the surface of the component with which the lip 4 is in sliding contact towards the atmosphere side. The atmosphere side sliding surface 5 is configured by a sloped surface that is sloped by the large curve 15 protruding in an R-shape from the tip of the sealing lip 4 towards the base portion of the sealing lip 4. A portion of the sealing lip 4 on the tip section side slides over the shaft 3. The thread 6 is provided on the atmosphere side sliding surface 5 that is formed by the large curve 15, described above. Sealing performance is enhanced by a pumping effect of the thread 6. The thread 6 is formed at a predetermined angle θ on the atmosphere side sliding surface 5 formed by the curve 15 having a large diameter R, described above. The cross-section of the thread 6 is an almost triangular peaked shape with an angle of about 90 degrees. The thread 6 is formed including a low projecting section 16 where the thread height at the tip of the sealing lip 4 is H1 and a high projecting section 17 of which the height of a projecting section of the thread at a required position distant from the tip of the lip 4 is a desired height H2 higher than the height H1 at the tip section. The thread 6 is formed connecting the lip tip of the low projecting section 16 having the thread height of H1 to the high projecting section 17 having the height H2. A ridge line 18 of the thread peak of the formed thread is formed linearly. As a result of the ridge line 18 of the thread peak being linear, in conjunction with the atmosphere side sliding surface 5 being the large curve 15, the thread is configured such that the height of the thread 6 gradually increases away from the lip tip. In addition, the thread width gradually widens from the tip.

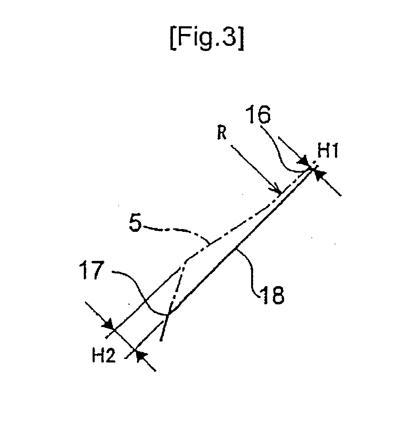

The above-described thread according to the embodiment will be further described in detail. As shown in Fig. 3, at the tip of the sealing lip 4, the large-diameter curve 15 passes the tip. Therefore, although the thread height at the tip of the sealing lip 4 is H1, because the atmosphere side sliding surface 5 at the tip section of the sealing lip 4 is the curve 15 having a large diameter R, the height of the thread peak is not constant on the atmosphere side of the tip of the sealing lip 4. The thread height begins to gradually increase immediately from the tip section. As described above, as a result of the curved atmosphere sliding surface 5 having a large diameter R and the linear ridge line 18, the height of the thread peak at the tip section of the sealing lip 4 gradually increases away from the tip.

In this way, according to the embodiment, the atmosphere side sliding surface 5 serving as a base surface of the thread 6 has a curved shape with a large diameter R, and a sealing angle change is formed at the tip section of the sealing lip 4 by a large curve. As a result, instability caused by angle change can be eliminated. In addition, the ridge line 18 of the thread peak is formed linearly, and the atmosphere side sliding surface 5 is formed into a large-diameter curve passing through the tip of the sealing lip 4, as described above. Therefore, the thread height is configured to gradually increase immediately from the atmosphere side sliding surface 5 serving as the base.

In the hermetic sealing device according to the embodiment, the spiral-shaped thread 6 is provided connected to the tip of the sealing lip 4 on the atmosphere side sliding surface 5 on the inner side of the sealing lip 4 in the radial direction, the sealing lip 4 having elasticity. Therefore, the tip of the thread 6 comes into contact with the shaft 3 in a mounted state. In an initial stage of use when the sealing lip 4 is not worn, the lip tip comes into contact with the shaft 3, exerting a pumping effect in which sealed fluid that attempts to leak from the sealed side towards the atmosphere side is constantly positioned on the sealed side.

When the wear of the tip of the sealing lip 4 progresses with use, the thread 6 of which the height gradually increases from the height H1 of the thread 6 comes into contact with the shaft 3. Therefore, the height from the atmosphere side sliding surface (sealing surface) 5 of the thread 6 in contact with the shaft 3 gradually increases, gradually strengthening the pumping effect in which the sealed fluid that attempts to leak is constantly positioned on the sealed fluid side. A stable sealing effect can be achieved.

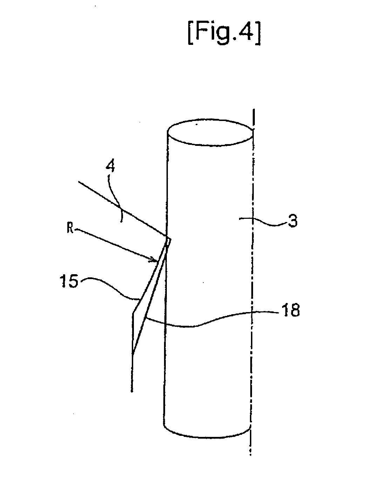

In the above-described usage state, when the oil seal 1 is mounted on a housing (not shown), and the sealing lip 4 of the oil seal 1 is in sealing contact with the shaft 3, as shown in Fig. 4, because the ridge line 18 of the thread peak is linear, a constant space can be maintained in relation to the shaft 3, without the thread peak approaching the shaft 3. Because a stepped guiding section such as that which guides dust entering between the lip and rotating and scattering around the periphery of the shaft rotating at high speed to a contacting section of the lip tip is not included according to the embodiment, the risk of dust being guided to the lip tip section can be suppressed.

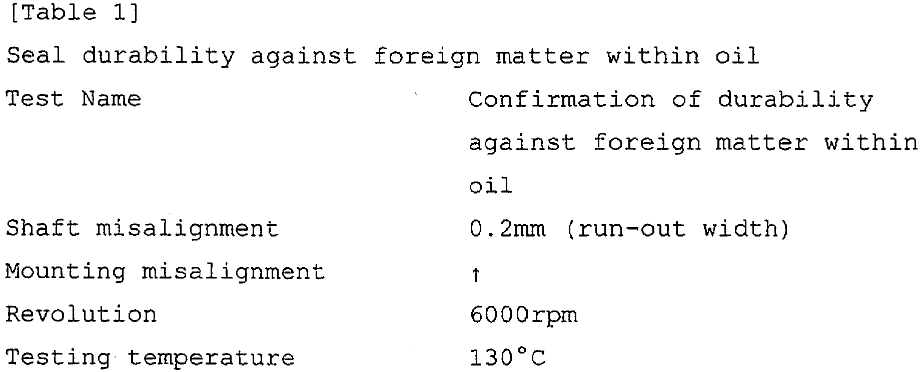

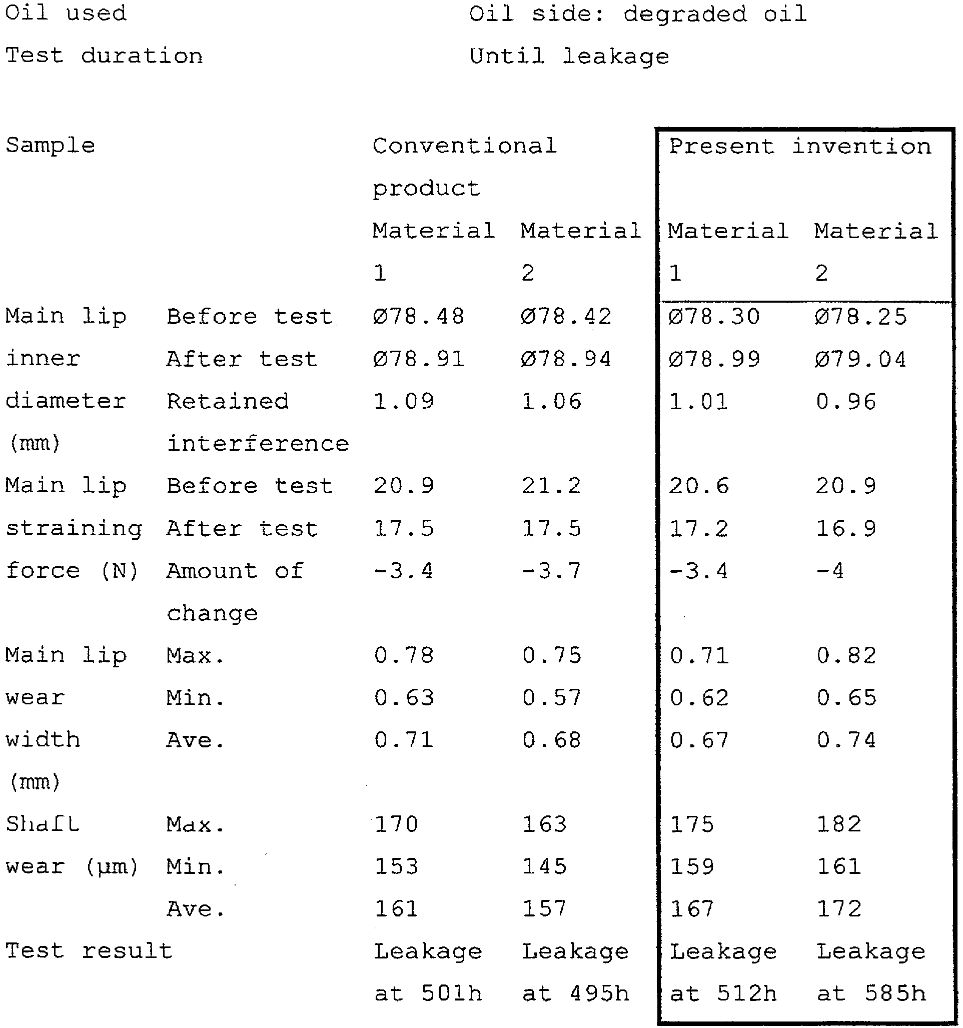

In Table 1, two samples each of a seal described according to the embodiment of the present invention and a conventional product described in Patent Literature 2 were respectively evaluated as Material 1 and Material 2 for seal durability against foreign matter within oil.

In Table 1, the time elapsed until oil leakage occurs is examined using degraded oil, with a shaft misalignment of 0.2mm in run-out width, a rotation frequency of 6000rpm, and a testing temperature of 130°C. As shown in Table 1, there is little difference in the wear width and the wear depth of the lip between the seal described according to the embodiment of the present invention and the conventional product. Rather, compared to the conventional product, the time elapsed until leakage is slightly longer. The product according to the embodiment of the invention compares favorably with the conventional product.

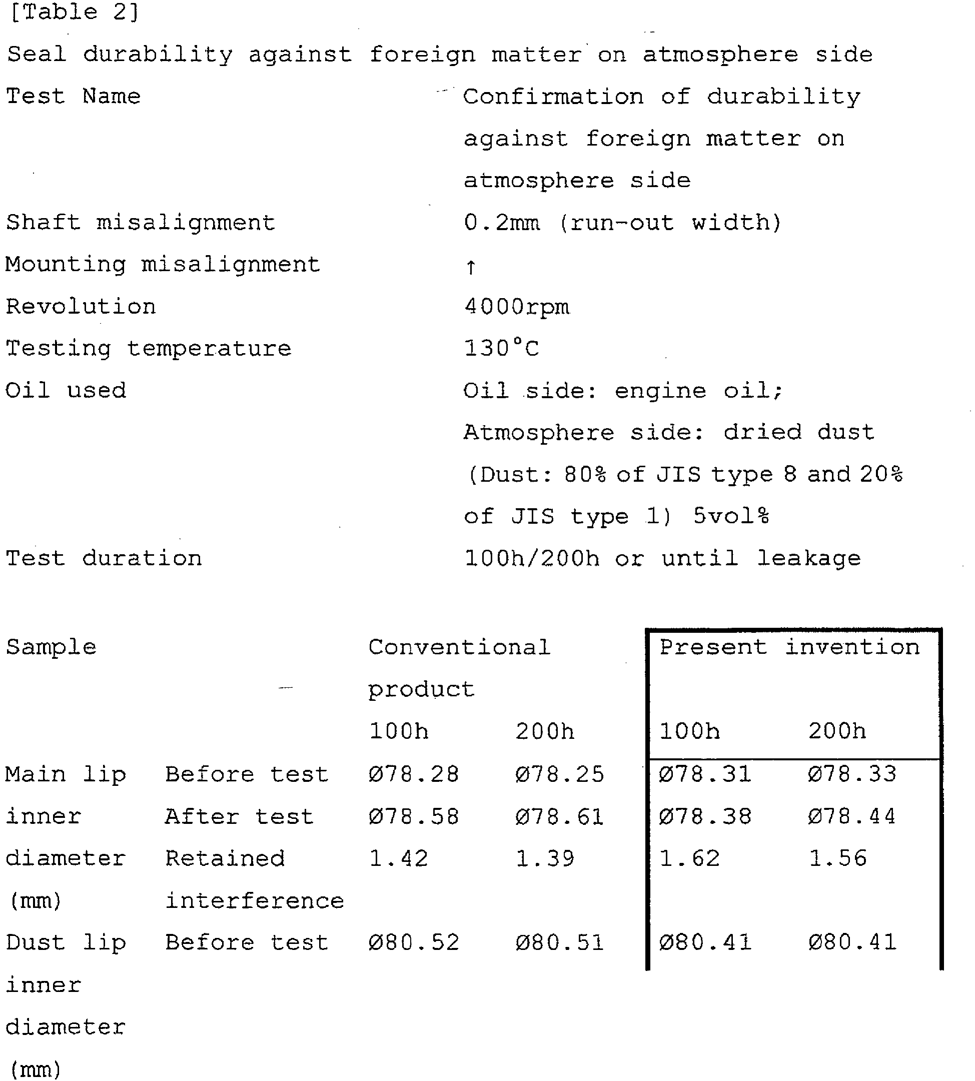

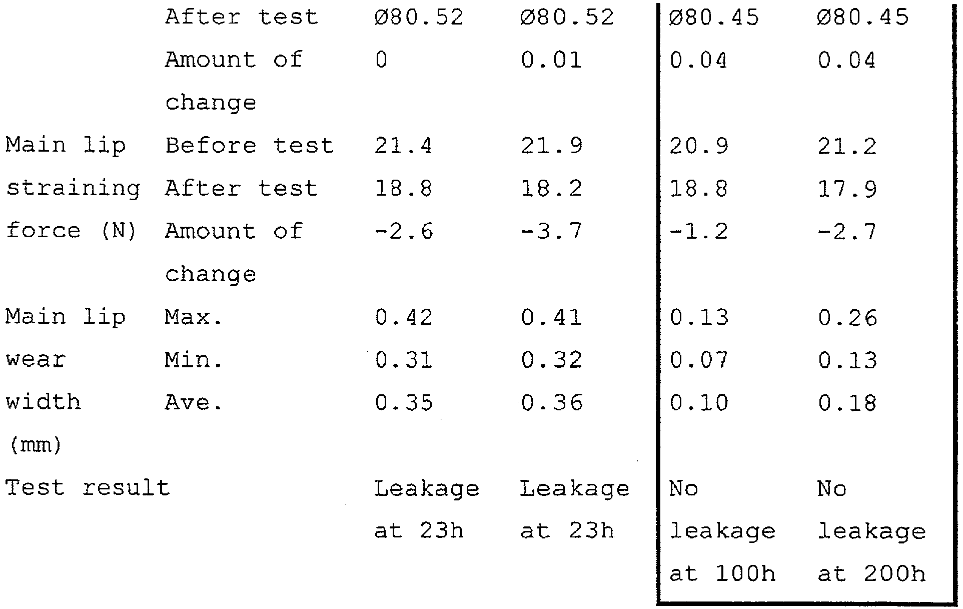

In Table 2, two samples each of the conventional product and the seal described according to the embodiment of the present invention were respectively evaluated as Material 1 and Material 2 for seal durability against foreign matter on the atmosphere side.

In Table 2, the test was conducted for 100 hours or until leakage occurred, with a shaft misalignment of 0.2mm in run-out width, a rotation frequency of 4000rpm, a 200-hour testing temperature of 130°C, engine oil placed on the oil side, and dried dust placed on the atmosphere side. The conventional product started to leak at 23 hours. The product according to the embodiment of the present invention did not leak even after the elapse of 100 hours or 200 hours because, as described above, regarding infiltration of dust, the dust is not guided to the lip side. As a result, it has been proven that the product according to the embodiment of the present invention is significantly superior regarding durability against dust,

compared to the conventional product.

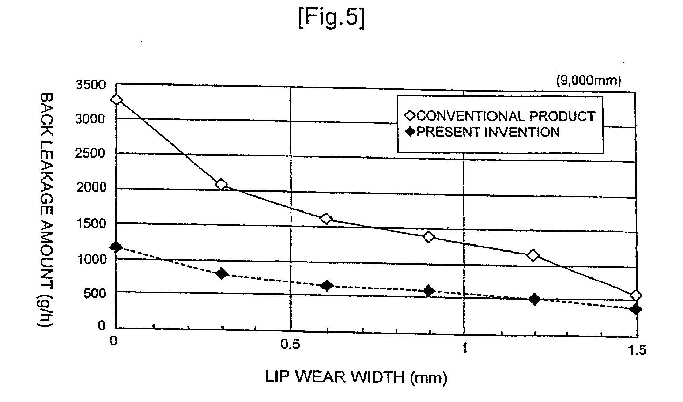

Fig. 5 is a graph indicating the wear width of the lip and a back leakage amount (suction amount). In the conventional product, it can be seen that the amount of suction decreases as the wear width of the lip increases. This indicates deterioration of sealability. According to the embodiment of the present invention, little change is found in the suction amount even when the wear width of the lip increases. Sealability does not change, and favorable sealability can be maintained.

As described above, according to the embodiment of the present invention, the atmosphere side sliding surface 5 is formed by the large-diameter curve 15 passing the lip tip. The ridge line 18 of the thread peak of the thread 6 provided on the sliding surface 5 is formed linearly. Therefore, when the seal main body is mounted on the rotating shaft 3, because the ridge line 18 of the thread peak is formed linearly as described above, there is nothing present that acts as a factor for guiding dust between the rotating shaft 3 and the thread 6. Dust is not guided to the sealing lip tip, and sealability is not impaired.

## Claims

1. A hermetic sealing device that seals a ring-shaped space between two components assembled such as to rotate freely in relation to each other, the sealing device comprising,
a ring-shaped seal main body (2) assembled to one component of the two components;
a thread (6) on an atmosphere side sliding surface (5) of a sealing lip (4) included in the seal main body that is in sliding contact with the other component of the two components, wherein the thread (6) is formed on the atmosphere side sliding surface (5), connecting a low projecting section (16) at the lip tip to a high projecting section (17) having a required height provided at a predetermined position distant from the lip tip and the height of the thread gradually and continuously increases away from the lip tip, and wherein the thread gradually widens from the lip tip, **characterized in that**
in the unassembled condition, the atmosphere side sliding surface of the sealing lip is formed into a large curve (15) starting from the sealing lip tip and receding from the surface of the component with which the lip is in sliding contact towards the atmosphere side,
and a ridge line (18) of the thread peak of the formed thread is linear along the entirety of the ridge line.

## Patentansprüche

1. Eine hermetische Dichtungsvorrichtung, die einen ringförmigen Raum zwischen zwei Komponenten abdichtet, welche derart zusammengebaut sind, dass sie frei im Verhältnis zueinander drehen, wobei die Dichtungsvorrichtung Folgendes beinhaltet:
einen ringförmigen Dichthauptkörper (2), der zu einer Komponente der zwei Komponenten zusammengebaut ist;
ein Gewinde (6) auf einer Atmosphärenseite-Gleitfläche (5) einer Dichtungslippe (4), die in dem Dichthauptkörper eingeschlossen ist, welcher in gleitendem Kontakt mit der anderen Komponente der zwei Komponenten ist, wobei das Gewinde (6) auf der Atmosphärenseite-Gleitfläche (5) gebildet ist und einen unteren vorstehenden Teilabschnitt (16) an der Lippenspitze mit einem oberen vorstehenden Teilabschnitt (17) mit einer vorgeschriebenen Höhe, die an einer vorbestimmten Position bereitgestellt ist, entfernt von der Lippenspitze, verbindet, und wobei die Höhe des Gewindes allmählich und kontinuierlich von der Lippenspitze weg zunimmt, und wobei das Gewinde sich allmählich von der Lippenspitze verbreitert, **dadurch gekennzeichnet,**
**dass**
im nicht zusammengebauten Zustand die Atmosphärenseite-Gleitfläche der Dichtungslippe zu einer großen Kurve (15), ausgehend von der Dichtungslippenspitze und zurückweichend von der Fläche der Komponente, mit der die Lippe in gleitendem Kontakt zur Atmosphärenseite hin ist, gebildet ist, und eine Kantenlinie (18) des Gewindescheitels des gebildeten Gewindes entlang der Gesamtheit der Kantenlinie linear ist.

## Revendications

1. Un dispositif d'étanchéité hermétique qui scelle un espace conformé en anneau entre deux composants assemblés de façon à tourner librement l'un par rapport à l'autre, le dispositif d'étanchéité comprenant,
un corps principal d'élément d'étanchéité conformé en anneau (2) assemblé sur un composant des deux composants ;
un filet (6) sur une surface de glissement côté atmosphère (5) d'une lèvre d'étanchéité (4) inclue dans le corps principal d'élément d'étanchéité qui est en contact glissant avec l'autre composant des deux composants, dans lequel le filet (6) est formé sur la surface de glissement côté atmosphère (5), raccordant une section saillante basse (16) au niveau du bout de la lèvre à une section saillante haute (17) ayant une hauteur requise prévue à une position prédéterminée distante du bout de la lèvre et la hauteur du filet augmente graduellement et continuellement à mesure qu'il s'écarte du bout de la lèvre et dans lequel le filet s'élargit graduellement à partir du bout de la lèvre, **caractérisé en ce que**
à l'état non assemblé, la surface de glissement côté atmosphère de la lèvre d'étanchéité est formée en une grande courbe (15) partant du bout de la lèvre d'étanchéité et se retirant de la surface du composant avec lequel la lèvre est en contact glissant en direction du côté atmosphère,
et une ligne d'arête (18) du sommet de filet du filet formé est linéaire tout au long de la ligne d'arête.
